Europäisches Patentamt

European Patent Office

Office européen des brevets

(11) Veröffentlichungsnummer: **0 443 101 A2**

# (12) EUROPÄISCHE PATENTANMELDUNG

(21) Anmeldenummer: 90121726.5

(22) Anmeldetag: 13.11.90

(51) Int. Cl.5: **A22C 17/00, A22B 7/00**

(30) Priorität: 13.11.89 DE 3937742

(43) Veröffentlichungstag der Anmeldung:
28.08.91 Patentblatt 91/35

(84) Benannte Vertragsstaaten:
AT CH DE DK LI

(71) Anmelder: Banss Maschinenfabrik GmbH &
Co. KG
Industriestrasse 4
W-3560 Biedenkopf(DE)

Anmelder: INAS EDELSTAHL
VERTRIEBS-GmbH
Postfach 1648
W-4720 Beckum(DE)

(72) Erfinder: Brunet, Johannes
Rosengarten 10
W-3550 Marburg(DE)
Erfinder: Sander, Karl-Friedrich
Engelbacherstrasse 27
W-3552 Wetter(DE)
Erfinder: Vogt, Hermann
Einsteinstrasse 17
W-4720 Beckum(DE)
Erfinder: Steinsträter, Michael
Schrievers Brede 6
W-4720 Beckum(DE)

(74) Vertreter: Klunker . Schmitt-Nilson . Hirsch
Winzererstrasse 106
W-8000 München 40(DE)

(54) Anlage zum erleichterten Zerlegen von Schlachttierteilen, insbesondere Rindervierteln.

(57) Die Zerlegeerleichterungsanlage insbesondere für Rinderviertel weist auf:
- einen höhenbeweglichen, ersten Transportbahnabschnitt (62) mit einer Haken-Blockiereinrichtung (66);
- einen höhenverfahrbaren, zweiten Transportbahnabschnitt (36);
- eine höhenverfahrbare Vortriebseinheit (34), die einen Motor (50) und ein mittels des Motors bewegbares Angreifteil (54) aufweist.

Ein an einem Haken (26) des ersten Transportbahnabschnitts (62) hängender, erster Bereich des zu zerlegenden Schlachttier-Teils und ein an einem Haken (26) des zweiten Transportbahnabschnitts (36) hängender, zweiter Bereich des Schlachttier-Teils sind mittels der Vortriebseinheit kraftbetätigt auseinanderbewegbar.

FIG.4

EP 0 443 101 A2

# ANLAGE ZUM ERLEICHTEREN ZERLEGEN VON SCHLACHTTIER-TEILEN, INSBESONDERE RINDERVIER-TELN

Die Erfindung bezieht sich auf eine Anlage zum erleichterten Zerlegen von Schlachttier-Teilen, insbesondere Rindervierteln, mit:

(a) einem höhenbeweglichen, ersten Transportbahnabschnitt zum Abstützen von Transporthaken für angehängte Schlachttier-Teile;

(b) einer dem ersten Transportbahnabschnitt zugeordneten, aktivierbaren und passivierbaren Transporthaken-Blockiereinrichtung zum Bewegungsblockieren von Transporthaken auf dem ersten Transportbahnabschnitt.

(c) einem zweiten Transportbahnabschnitt zum Abstützen von Transporthaken für angehängte Schlachttier-Teile; und

(d) einer Vortriebseinheit, die einen Motor und mittels des Motors bewegbares Angreifteil zum Angreifen an einem zweiten Bereich des jeweiligen, zu zerlegenden Schlachttier-Teils aufweist, so daß der an einem Transporthaken des zweiten Transportbahnabschnitts hängende, zweite Bereich des Schlachttier-Teils und ein an einem Transporthaken des ersten Transportbahnabschnitts hängender, durch die Blockiereinrichtung festgelegter, erster Bereich des Schlachttier-Teils kraftbetätigt auseinander bewegbar sind.

Anlagen dieser Art sind käuflich erhältlich. Bei diesen Anlagen ist ein relativ kurzer, erster Transportbahnabschnitt derart schwenkbar angeordnet, daß sich sein in Transportrichtung vorderes Ende absenken läßt. Am vorderen Ende dieses schwenkbaren Transportbahnabschnitts ist ein Anschlag vorgesehen. Die Vortriebseinheit erstreckt sich beabstandet parallel zu dem in Transportrichtung nach vorn anschließenden, zweiten Transportbahnabschnitt. Ein an einem Transporthaken am ersten Transportbahnabschnitt hängender, durch den Anschlag festgelegter, erster Bereich eines zu zerlegenden Schlachttier-Teils wird dadurch hinten gehalten, während ein durch einen Transporthaken am zweiten Transporbahnabschnitt hängender, zweiter Bereich des zu zerlegenden Schlachttierteils mittels des Angreifteils der Vortriebseinheit nach vorn bewegt wird. Infolgedessen kann der arbeitende Zerleger seine Auslöseschnitte oder Zerlegeschnitte erleichtert führen; durch die Auseinanderziehwirkung der Vorrichtung wird ihm sein Schneidbereich geöffnet bzw. offen gehalten. Die Zerlegung erfolgt hygienisch im hängenden Zustand der Schlachttier-Teile. Die Absenkbarkeit des ersten Transportbahnabschnitts hat den Sinn, den ersten Bereich des Schlachttier-Teils so weit absenken zu können, daß die beiden Bereiche des Schlachttier-Teils ohne wesentliche "Schiefstellung" des Schlachttierteils mit der Vorrichtung auseinandergezogen werden können.

Die Arbeitsbedingungen der an der bekannten Vorrichtung arbeitenden Zerleger sind nicht optimal, weil die Hängelänge der Schlachttier-Teile je nach Größe des geschlachteten Tiers (auch wenn es sich beispielsweise immer um Rinder handelt) variiert, weil wechselnd Vorderviertel, lange Hinterviertel und kurze Hinterviertel der Schlachttiere zu zerlegen sind, und weil der Zerleger seine Schnitte weiter oben und weiter unten an dem zu zerlegenden Schlachttier-Teil führen muß.

Der Erfindung liegt die Aufgabe zugrunde, eine Anlage der eingangs genannten Art verfügbar zu machen, die dem Zerleger ein Arbeiten in ergonomischer, optimaler Höhenposition ermöglicht. Dies hat deshalb besondere Bedeutung, weil das Zerlegen von Schlachttier-Teilen eine körperlich sehr anstrengende Tätigkeit ist und ein Zerleger eine um so höhere Leistung erbringt, je beque mer und ermüdungsfreier er arbeiten kann.

Zur Lösung dieser Aufgabe ist die Zerlegeerleichterungsanlage dadurch gekennzeichnet,

(e) daß der zweite Transportbahnabschnitt und die Vortriebseinheit an einem Rahmen befestigt sind;

(f) daß der Rahmen längs einer Führung mechanisiert in unterschiedliche Höhenpositionen verfahrbar ist; und

(g) daß der erste Transportbahnabschnitt so weit höhenbeweglich ist, daß seine Bewegungsblokkierstelle auf eine niedrigere Höhe als die gewählte Höhenposition des zweiten Transportbahnabschnitts bringbar ist.

Bei der erfindungsgemäsen Anlage läßt sich somit, unabhängig von der Länge des jeweiligen Schlachttier-Teils, das gesamte Schlachttier-Teil anheben oder absenken in optimaler Höhenposition für die Arbeit des Zerlegers. Es ist dem Zerleger möglich, beispielsweise nach einem Teil der Durchführung seiner Zerlegearbeit, das Schlachttier-Teil anzuheben, damit er für den Rest seiner Zerlegarbeit wiederum in bequemer Höhenposition arbeiten kann.

Es wird darauf hingewiesen, das die Vorrichtung prinzipiell auch dafür geeignet ist, die Zerlegung gesamter Schlachttierkörper zu erleichtern. Haupteinsatzfeld ist jedoch die Zerlegung von Schlachttier-Teilen, insbesondere Vordervierteln, langen Hintervierteln (mit einem Stück WirbeLsäule und einigen Rippen) und kurzen Hinter vierteln von Rindern.

Vorzugsweise ist die Anlage 50 ausgebildet, daß der Transportbahnabschnitt im Vergleich zu einer Neutral-Höhenposition, in der er im wesentlichen ohne Höhenänderung in die anschließende Transportbahn übergeht, sowohl nach oben als auch nach unten verfahrbar ist. Es ist jedoch alternativ möglich, die Anlage so auszulegen, das der Transportbahnabschnitt aus dieser Neutral-Höhenpcsition nur nach unten oder oben verfahrbar ist.

Die Verfahrbarkeit ist vorzugsweise in im wesentlichen senkrechter Richtung vorgesehen.

Der Begriff "Motor" der Vortriebseinheit ist umfassend zu verstehen; er kann im Prinzip durch jede geeignete Antriebseinrichtung verwirklicht sein. Als Beispiele seien hydraulische oder pneumatische Zylinder-Kolben-Einheiten genannt. Besonders bevorzugt ist jedoch, insbesondere wegen seiner guten Regelbarkeit, ein Elektromotor.

Bevorzugte Ausgestaltungen der Erfindung ergeben sich aus den Unteransprüchen. Zu den Unteranspruchsmerkmalen werden gleich anschließend oder im Zusammenhang mit dem Beispiel steil der Beschreibung noch weitere Ausführungen gemacht.

Die Einstellbarkeit der Abschalt-Vortriebskraftschwelle der Vortriebseinheit dient in erster Linie dazu, die Vortriebskraft auf die jeweilige Fleischbeschaffenheit (weich oder fest) einstellen zu können. In der Praxis läuft die Arbeit des Zerlegers so ab, daß er, während die Vortriebskraft herrscht, schneidet. Wenn mit zunehmender "Spreizung" des ersten Bereichs und des zweiten Bereichs des Schlachttier-Teils die vortriebskraft immer weiter ansteigt, kann wiederholt ein Zustand erreicht werden, bei dem sich die Vortriebseinheit selbsttätig abschaltet, bis der Zerleger weitere Schnitte geführt hat und infolgedessen ein Weitersspreizen mit erniedrigter vortriebskraft möglich ist. Vorzugsweise ist auch die Bewegungsgeschwindigkeit des Angreifteils der Vortriebseinheit einstellbar.

Als Sensoren der Vortriebseinheit sind Dehnungsmeßstreifen und elektrische Wiegezellen bevorzugt. Elektrische Wiegezellen sogar ganz besonders, weil sie genauer und robuster sind.

Die Führung erfolgt vorzugsweise mit Rollkörpern an im wesentlichen vertikalen Trägern.

Zum verfahren des Rahmens und zum Höhenbewegen des ersten Transportbahnabschnitts (vgl. Ansprüche 10 bis 12) eignen sich hydraulische und pneumatische Zylinder-Kolben-Einheiten, wobei pneumatische Zylinder-Kolben-Einheiten in der Regel bevorzugt sind.

Statt mittels des Rahmens den zweiten Transportbahnabschnitt und die vortriebseinheit gemeinsam aufwärts und abwärts zu verfahren, ist es in ganz äquivalenter Weise möglich, gesonderte Höhenverfahrbarkeiten für den zweiten Transportbahnabschnitt für sich und die Vortriebseinheit für sich vorzusehen oder die Vortriebseinheit nicht höhenverfahrbar zu machen und statt dessen eine Höhenverfahrbarkeit des Angreifteils relativ zu der Vortriebs einheit vorzusehen.

Die Erfindung und Ausgestaltungen der Erfindung werden nachfolgend anhand eines zeichnerisch dargestellten, bevorzugten Ausführungsbeispiels noch näher erläutert. Es zeigt:

Fig. 1 eine Draufsicht auf eine Rinderviertel-Zerlegeanlage;

Fig. 2 eine Stirnansicht der Zerlegeanlage von Fig. 1 gemäß Pfeil II in Fig. 1;

Fig. 3 eine Ausschnitts-Draufsicht der Anlage von Fig. 1;

Fig. 4 eine Ausschnitts-Seitenansicht der Anlage von Fig. 1 gemäß Pfeilen IV-IV;

Fig. 5 eine weitere Ausschnitts-Seitenansicht der Anlage von Fig. 1 gemäß Pfeilen V-V;

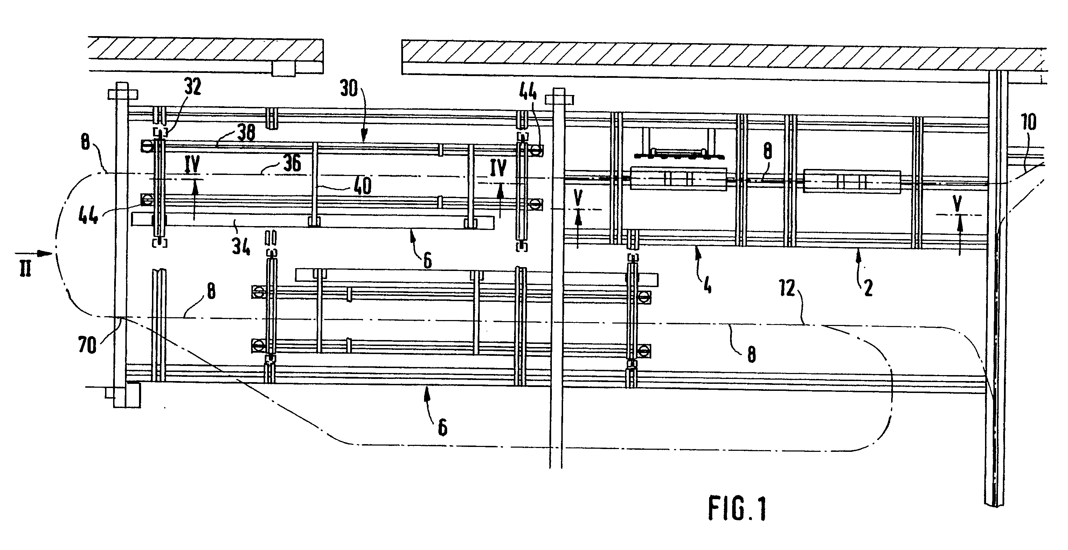

Die in der Draufsicht in der Fig. 1 am besten überschaubare Zerlegeanlage weist - in Rinderviertel-Transportrichtung fortschreitend - eine erste Vorrichtung 2 ("Vorschneidstation"), eine zweite Vorrichtung 4 ("Vorzerlegestation") sowie zwei hintereinandergeschaltete, dritte Vorrichtungen 6 ("Zerlegestationen") auf. Eine Transportbahn 8 zieht sich durch diese vier Vorrichtungen 2, 4, 6 und ist am Anfang der ersten Vorrichtung 2' an eine heran führende Transportbahn 10 des Schlachthofs angeschlossen und hinter der vierten Vorrichtung 6 an eine weg führende Transportbahn 12 des Schlachthofs angeschlossen.

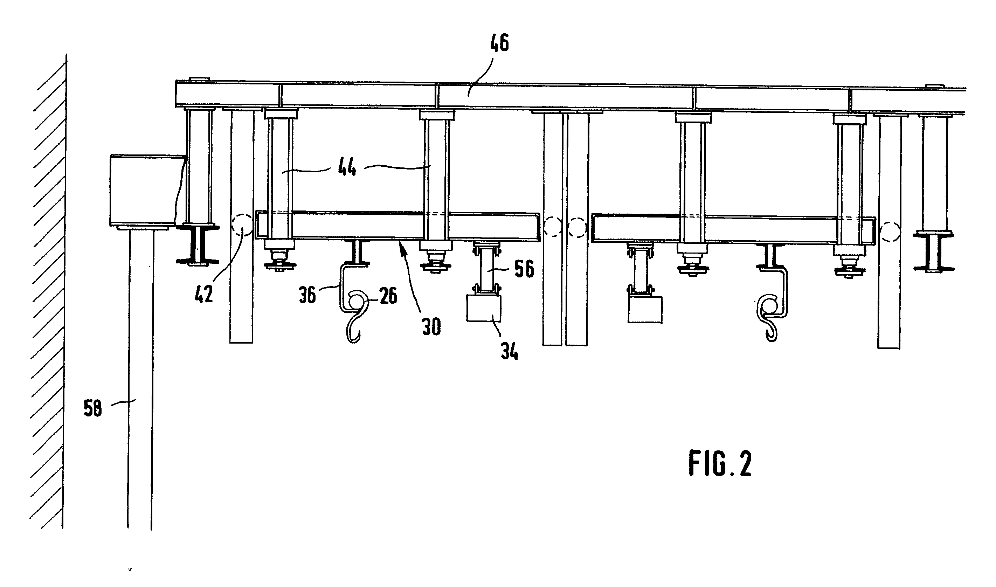

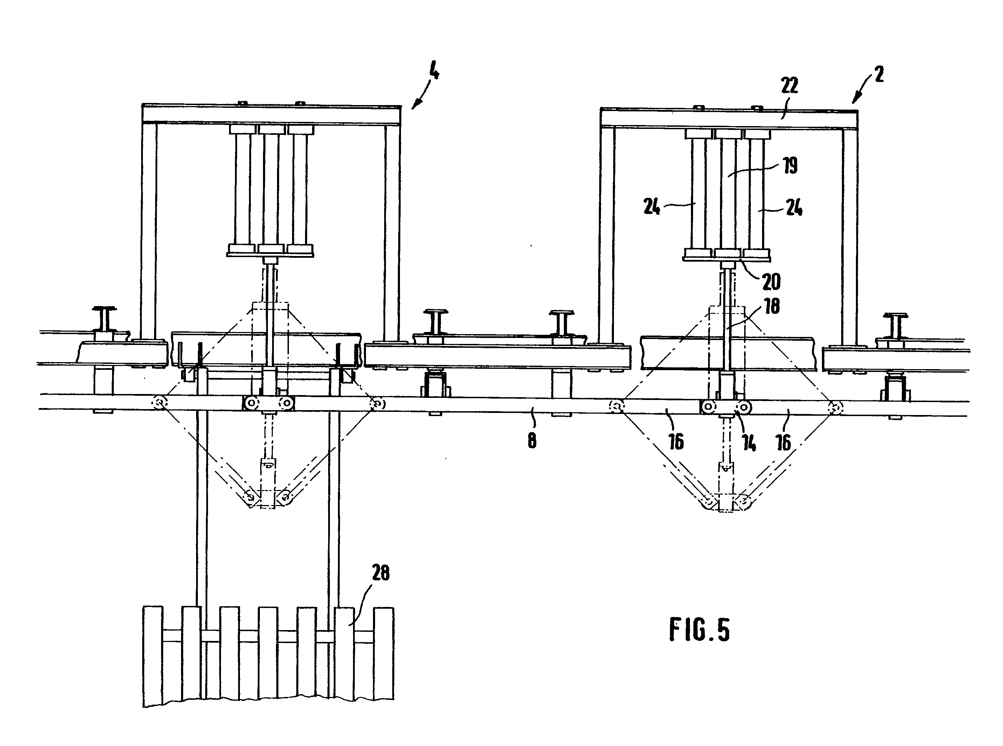

Den Aufbau der ersten Vorrichtung 2 erkennt man am besten in Fig. 5, rechts. Ein relativ kurzer Transportbahnabschnitt 14 (in Anspruch 14 "dritter Transportbahnabschnitt" genannt) ist mittels eines vorderen und eines hinteren, teleskopisch längenveränderlichen, beidendig gelenkig angeschlossenen Transportbahn-Zwischenstücks 16 an die Transportbahn 8 angeschlossen. An dem Transportbahnabschnitt 14 ist die vertikale Kolbenstange 18 einer Zylinder-Kolben-Einheit 19 befestigt. Das untere Ende des Zylinders der Zylinder-Kolben-Einheit 19 ist an einem Querjoch 20 befestigt und das obere Ende dieses Zylinders ist frei. Zwischen dem Querjoch 20 und einem darüber längsverlaufenden, stationären Träger 22 wirken zwei parallele, hydraulische Zylinder-Kolben-Einheiten 24. Mittels der Zylinder-Kolben-Einheiten 19 läßt sich der Transportbahnabschnitt 14 aus der Ebene der Transportbahn 8 heraus nach oben anheben, mittels der Zylinder-Kolben-Einheiten 24 läßt sich der Transportbahnabschnitt 14 aus der Ebene der Transportbahn 8 heraus nach unten absenken, beides wie mit gestrichelten Linien in Fig. 5 angedeutet. Dabei behält der Transportbahnabschnitt 14 seine Orientierung parallel zur Ebene der Transportbahn 8 bei. Wenn ein Transporthaken 26 (vgl. Fig. 2), an dem ein Rinderviertel hängt, auf den Transportbahnabschnitt 14 geschoben ist, kann das Rinderviertel durch die beschriebene Höhenverfahrbarkeit angehoben oder abgesenkt werden, je nach den Bedürfnissen des an dieser Station arbeitenden Zerlegers.

Die besonders deutlich in Fig. 5, links, erkennbare, zweite Vorrichtung 4 ist ganz analog wie die beschriebene erste Vorrichtung 2 aufgebaut. Zusätzlich ist lediglich unterhalb der Transportbahn 8 eine Schrägzerlegewand 28 vorgesehen, an der sich das jeweils zu bearbeitende Rinderviertel auf der dem Zerleger abgewandten Seite abstützt. Die Schrägzerlegewand 28 ist aus einer Vertikalposition, in der sie sich seitlich befindet und ein Vorbeischieben von Rindervierteln erlaubt, und einer leicht aufwärts geschwenkten Schrägposition, in der sie ein zu bearbeitendes Rinderviertel abstützt, mittels einer pneumatischen Zylinder-Kolben-Einheit verschwenkbar.

Die dritte Vorrichtung 6 und die vierte Vorrichtung 6 sind nahezu identisch aufgebaut, so daß deren Beschreibung nur einmal erfolgt. Die Vorrichtung 6 besteht hauptsächlich aus einem in Draufsicht im wesentlichen rechteckigen Rahmen 30, vier vertikalen Führungsträgern 32 in den Eckbereichen des Rahmens 30, und einer Vortriebseinheit 34, die am Rahmen 30 befestigt ist und sich parallel zu einem Transportbahnabschnitt 36 der dritten Vorrichtung 6 erstreckt. Der Rahmen 30 befindet sich im wesentlichen in einer horizontalen Ebene. Der Rahmen 30 besteht im wesentlichen aus zwei Längsträgern 38 und vier die Längsträger 38 verbindenden Querträgern 40.

Insbesondere in Fig. 2 erkennt man, daß an der Unterseite des Rahmens 30 mittig zwischen den beiden Längsträgern 38 der Transportbahnabschnitt 36 befestigt ist. Auf einer Seite sind die Querträger 40 über den dortigen Längsträger 38 hinaus verlängert. Dort ist unter den Querträgern 40 des Rahmens 30, links oder rechts neben und parallel zu dem Transportbahnabschnitt 36, die Vortriebseinheit 34 befestigt.

Jeder Führungsträger 32 besteht aus einem Paar von U-Trägern, die mit ihrer offenen Seiten unter Freilassung eines Spalts nebeneinandergestellt sind. An den beiden Enden sowohl des vordersten als auch des hintersten Querträgers 40 sind Rollen 42 angebracht, die in das Innere des betreffenden Führungsträgerpaars 32 greifen.

Die Führungsträger 32 können auch aus einem Rund-, Quadrat- oder Recheckrohr oder einem anderen Profil hergestellt sein. Hierbei sind die Hohlprofile mit einem Schlitz an einer Seite versehen. Anstelle der Rollen 42 können auch Gleitschuhe oder Gleithülsen aus Metall oder Kunststoff zum Einsatz kommen. Bei Einsatz von außen auf den Führungsträgern 32 angeordneten Rollen, Gleitschuhen oder Gleithülsen sind keine Schlitze oder Spalte in den Führungsträgern 32 erforderlich.

Sowohl am vorderen als auch am hinteren Ende jedes Längsträgers 38 ist eine vertikale, pneumatische Zylinder-Kolben-Einheit 44 befestigt. Jede Zylinder-Kolben-Einheit 44 ist oben an einem massiven Querträger 46 des Vorrichtungsgerüsts befestigt. Mittels der Zylinder-Kolben-Einheiten 44 läßt sich der Rahmen 30 in Vertikalrichtung verfahren, wobei er durch die Rollen 42, Gleitschuhe oder Gleithülsen läng der Führungsträger 32 geführt ist. Mit dem Rahmen 30 bewegen sich der Transportbahnabschnitt 36 und die Vortriebseinheit 34 translatorisch aufwärts und abwärts. Der Rahmen 30 läßt sich relativ zu einer Neutral-Höhenposition, in der der Transportbahnabschnitt 36 mit der anschließenden Transportbahn 8 fluchtet, nach oben und nach unten verfahren.

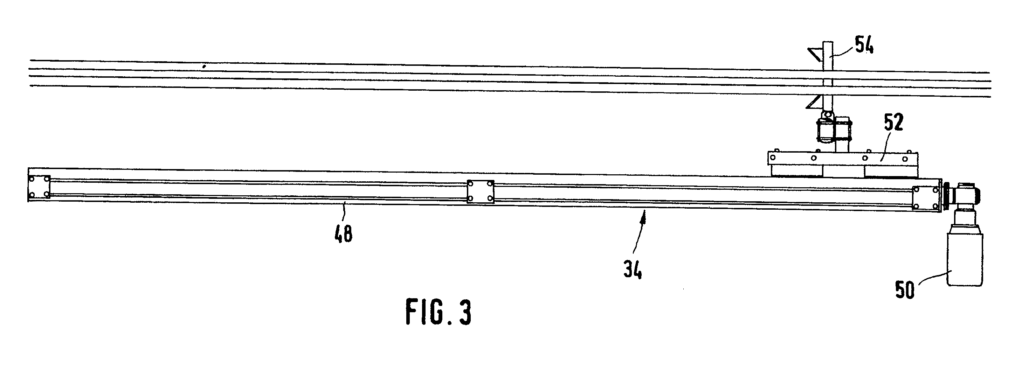

In Fig. 3 erkennt man deutlicher den Aufbau der Vortriebseinheit 34. Die Vortriebseinheit 34 weist hauptsächlich ein geradliniges, langgestrecktes, auf einer Seite längsgeschlitztes Gehäuse 48, eine darin rotierbar angeordnete, in Fig. 3 nicht sichtbare Gewindespindel, einen elektrischen Antriebs-Getriebemotor 50 zum rotierenden Antreiben der Gewindespindel, einen längs des Gehäuses 48 verfahrbaren Schlitten 52, und einen quer zur Längserstreckung des Gehäuses 48 von dem Schlitten 52 wegragenden Arm 54 als Angreifeinrichtung an einem zu zerlegenden Rinderviertel auf. Auf der Gewindespindel sitzt eine oder mehrere Wandermuttern (nicht sichtbar), die mit dem Schlitten 52 verbunden sind, so daß dieser bei Rotation der Gewindespindel in Längsrichtung verfahren wird. Der in Fig. 2 nicht eingezeichnete Arm 54 befindet sich etwas unterhalb des Rohrbahnabschnitts 36.

An der Aufhängung 56 (Fig. 2) der Vortriebseinheit 34 ist ein Kraftsensor, insbesondere in Gestalt eines Dehnungsmeßstreifens oder einer elektrischen Wiegezelle, angeordnet, so daß dort laufend erfaßt wird, eine wie große Längskraft die Vortriebseinheit 34 auf den von dem Arm 54 hintergriffenen, ersten Bereich des jeweils zu zerlegenden Rinderviertels ausübt. Über eine nicht eingezeichnete Schaltung wird der Elektromotor 50 abgeschaltet, wenn diese Längskraft einen einstellbaren Schwellwert überschreitet. Wenn die Längskraft wieder unter den eingestellten Schwellwert sinkt, wird der Elektromotor 50 wieder eingeschaltet.

Bei der in den Fig. 1 bis 5 gezeichneten Anlage sind die dritten Vorrichtungen 6 auf stützen 58 montiert, die auf dem Schlachthofboden ruhen. Es ist alternativ möglich, die Vorrichtungen 6 als an der Schlachthofdecke oder den Schlachthofwänden hängend auszubilden.

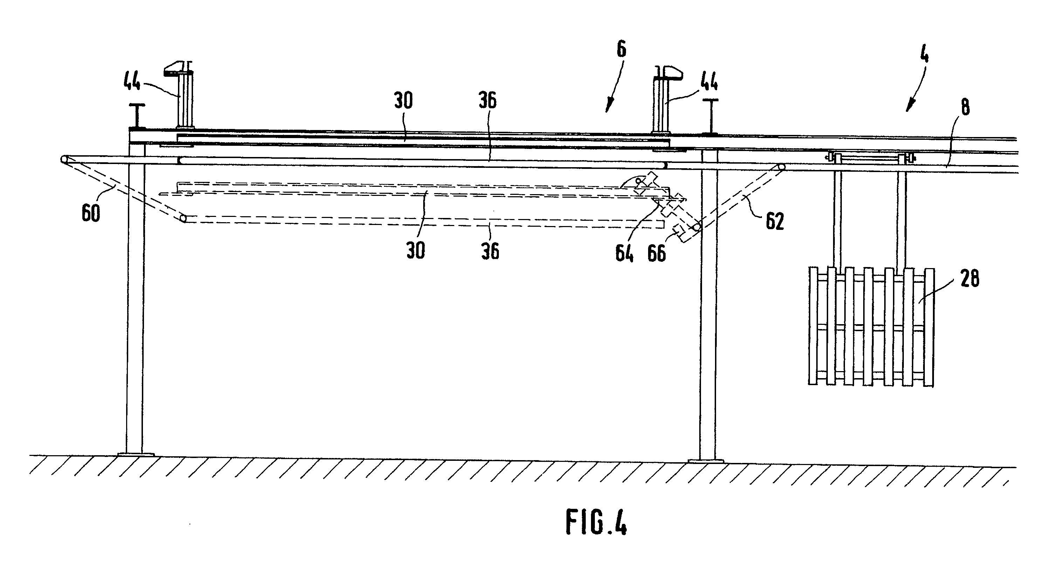

In Fig. 4 ist eine der Zerlegestationen 6 gezeichnet, wobei die vor der Zeichnungsebene liegende Vortriebseinheit 34 nicht sichtbar ist. Man erkennt die weiter vorn bereits beschriebenen Bauteile: Rahmen 30, Zylinder-Kolben-Einheiten 44 und Transportbahnabschnitt 36. Durch Fig. 4 wird veranschaulicht, daß der Transportbahnabschnitt 36 in Transportrichtung vorn, also links in Fig. 4, über ein teleskopisch längenveränderliches, beidendig gelenkig angeschlossenes Transportbahn-Zwischenstück 60 an die weiterführende Transportbahn angeschlossen ist. Man erkennt ferner, daß zwischen dem in Transportrichtung hinteren, also in Fig. 4 rechten, Ende des Transportbahnabschnitts 36 und der heranführenden Transportbahn 8 eine Schwinge 62 angeordnet ist, die mittels einer pneumatischen Zylinder-Kolben-Einheit 64, die hinter der Zeichnungsebene liegend an dem Rahmen 30 und an der Schwinge 62 angelenkt ist, um ihren in Fig. 4 rechten Endpunkt schwenkbar ist. Durch diese Schwenkbarkeit läßt sich der in Fig. 4 linke Endbereich der Schwinge 62 so weit absenken, daß er sich auf einem niedrigeren Niveau befindet als der Transportbahnabschnitt 36. Außerdem erkennt man am linken Endbereich der Schwinge 62 einen wahlweise in die gezeichnete Aktivstellung oder in eine Passivstellung bringbaren Anschlag 66. Die Schwinge 62 wird in den Ansprüchen und weiter vorn in der Beschreibung als erster Transportbahnabschnitt bezeichnet, und der Transportbahnabschnitt 36 wird in den Ansprüchen und weiter vorn als zweiter Transportbahnabschnitt bezeichnet. Bei dem Rahmen 30, der Schwinge 62 und dem Transportbahnzwischenstück 60 ist die untere Stellung mit unterbrochenen Linien eingezeichnet, während die Neutralstellung mit durchgezogenen Linien eingezeichnet ist.

Man kann somit bei unausgefahrener Zylinder-Kolben Einheit 64 den Rahmen 30 und damit den Transportbahnabschnitt 36 gegenüber der mit durchgezogenen Linie gezeichneten Neutralstellung anheben oder absenken, wobei dann das Transportbahnzwischenstück 60 und die Schwinge 62 schräge Lagen einnehmen. Unabhängig von dieser Höhenverfahrbarkeit kann die Schwinge 62 relativ zu dem Transportbahnabschnitt 36 abgesenkt werden.

Es versteht sich, daß die in Fig. 4 gezeichnete Höhenbeweglichkeit der Schwinge 62 nur eine von mehreren Möglichkeiten ist, den ersten Transportbahnabschnitt höhenbeweglich zu machen. Beispielsweise könnte man statt der schwenkenden Höhenbeweglichkeit eine translatorische Höhenbeweglichkeit des ersten Transportbahnabschnitts vorsehen. Außerdem wäre es beispielsweise möglich, an der Stelle, wo die Schwinge 62 gezeichnet ist, ein Transportbahn-Zwischenstück wie das Transportbahn-Zwischenstück 60 vorzusehen und eine Schwinge 62 bzw. einen translatorisch höhenbeweglichen, ersten Transportbahnabschnitt anstelle des hinteren, also in Fig. 4 rechten, Teils des zweiten Transportbahnabschnitts 36 vorzusehen. Eine weitere Möglichkeit besteht darin, die Schwinge 62 bzw. einen translatorisch höhenbeweglichen, ersten Transportbahnabschnitt nicht dem Rahmen 30 zuzuordnen (wobei sie sich gemeinsam mit dem Rahmen 30 aufwärts und abwärts bewegt), sondern die Schwinge 62 bzw. einen translatorisch höhenbeweglichen, ersten Transportbahnabschnitt an einem geeigneten stationären Schlacht hofträger aufzuhängen. In diesem Fall wurde somit die Schwinge 2 bzw. der translatorisch höhenbewegliche, erste Transportbahnabschnitt seine Höhenbewegung im Prinzip unabhängig von der Höhenbewegung des zweiten Transportbahnabschnitts voll führen.

Nachfolgend wird ein typischer Arbeitsablauf beim Zerlegen eines Rinder-Hinterviertels genauer beschrieben, wobei darauf hingewiesen wird, daß der Arbeitsablauf von Zerlegebetrieb zu Zerlegebetrieb beträchtlich variieren kann:

An der Vorschneidstation 2 wird das Filet herausgeschnitten und das Loch des Schloßknochens (= Beckenknochen) freigeschnitten. Danach werden an der Vorzerlegestation 4 die Dornfortsätze und Rippen getrennt, zum Beispiel mit Hilfe einer schnittiefenregulierbaren, druckluftbetriebenen Säge. Danach wird an der ersten Zerlegestation 6 der Schloßknochen von einem "Oberschale" genannten Fleischstück gelöst und ein Haken in das Loch des Schloßknochens gehängt. Dieser Haken wird auf die Schwinge 62 geschoben. Jetzt wird die Vortriebseinheit 34 eingeschaltet, und deren Angreifteil 54 greift oben an dem Bein des Hinterviertels an, so daß Keulenfleisch mit Röhrenknochen von dem gehaltenen Schloßknochen weggezogen werden. Während dieses Vorgangs schneidet der Zerleger am Schloßknochen entlang. Während dieses Vorgangs hängt die Hinterhesse (= Hinterbein) des Rinderviertels mittels eines Hakens an dem höhenverfahrbaren Transportabschnitts 36. Am Ende dieses Teils des Zerlegevorgangs hängt der Schloßknochen mit anhaftendem Wirbelkörper an der Schwinge 62, während davon getrennt das Keulenfleisch mit Röhrenknochen und Roastbeef sowie Rippen an dem Trans portbahnabschnitt 36 hängen.

Der Schloßknochen mit anhaftendem Wirbelkörper wird an einer Transportbahnweiche 70 (Fig. 1) ausgeschleust und an einer nicht im Detail gezeichneten und zu beschreibenden Knochenverarbeitungsstation weiterverarbeitet. Das an dem zweiten Haken hängende Teil des Hinterviertels wird zu der zweiten Zerlegestation 6 geschoben. Dort wird in das Keulenfleisch ein Haken eingehängt und dieser auf die dortige Schwinge 62 gehängt. Die zusammenhängenden Röhrenknochen werden mit der dortigen Vortriebseinheit 34 nach vorn gezogen, während der auf der Schwinge 62 hängende Haken zurückgehalten wird. Währenddessen schneidet der Zerleger an den Röhrenknochen entlang. Am Ende dieses Zerlegeschritts bleiben die restlichen Knochenbestandteile des Hinterviertels an dem höhenverfahrbaren Transportbahnabschnitt 36 hängen, während die kompletten Fleischbestandteile des Hinterviertels an dem Haken hängenbleiben, der auf der Schwinge 62 hängt.

Es ist alternativ möglich, nur eine Zerlegestation 6 statt der beschriebenen zwei hintereinandergeschalteten Zerlegestationen 6 zu haben, insbesondere bei Zerlegeanlagen mit geringerer Leistung in zu zerlegenden Schlachttier-Teilen pro Stunde. Eine weitere Variante besteht darin, die Vorzerlegestation4 zwischen die beiden beschriebenen Zerlegestationen 6 zu setzen.

Ein typischer Bereich der Höhe der Neutralposition des zweiten Transportbahnabschnitts 36 ist 2,3 bis 2,7 m . Ein typischer Bereich der Höhenverfahrbarkeit des zweiten Transportbahnabschnitts 36 ist 10 bis 50 cm entweder nur in einer Richtung aus der Neutralposition heraus oder jeweils um dieses Ausmaß sowohl nach oben als auch nach unten aus der Neutralposition heraus.

**Patentansprüche**

1. Anlage zum erleichterten Zerlegen von Schlachttier-Teilen, insbesondere Rindervierteln, mit:

(a) einem höhenbeweglichen, ersten Transportbahnabschnitt (62) zum Abstützen von Transporthaken (26) für angehängte Schlachttier-Teile;

(b) einer dem ersten Transportbahnabschnitt (62) zugeordneten, aktivierbaren und passivierbaren Transporthaken-Blockiereinrichtung (66) zum Bewegungsblockieren von Transporthaken (26) auf dem ersten Transportbahnabschnitt (62);

(c) einem zweiten Transportbahnabschnitt (36) zum Abstützen von Transporthaken (26) für angehängte Schlachttier-Teile; und

(d) einer Vortriebseinheit (34), die einen Motor (50) und ein mittels des Motors (50) bewegbares Angreifteil (54) zum Angreifen an einem zweiten Bereich des jeweiligen, zu zerlegenden Schlachttier-Teils aufweist, so daß der an einem Transporthaken (26) des zweiten Transportbahnabschnitts (36) hängende, zweite Bereich des Schlachttier-Teils und ein an einem Transporthaken (26) des ersten Transportbahnabschnitts (62) hängender, durch die Blockiereinrichtung (66) festgelegter, erster Bereich des Schlachttier-Teils kraftbetätigt auseinanderbewegbar sind, dadurch gekennzeichnet,

(e) daß der zweite Transportbahnabschnitt (36) und die Vortriebseinheit (34) an einem Rahmen (30) befestigt sind;

(f) daß der Rahmen (30) längs einer Führung (32) mechanisiert in unterschiedliche Höhenpositionen verfahrbar ist; und

(g) daß der erste Transportbahnabschnitt (62) so weit höhenbeweglich ist, daß ,seine Bewegungsblockierstelle auf eine niedrigere Höhe als die gewählte Höhenposition des zweiten Transportbahnabschnitts (36) bringbar ist.

2. Anlage nach Anspruch 1, dadurch gekennzeichnet, daß die Blockiereinrichtung ein in eine unwirksame Passivstellung bringbarer Anschlag (66) an dem ersten Transportbahnabschnitt (62) ist.

3. Anlage nach Anspruch 1 oder 2, dadurch gekennzeichnet, daß die Vortriebseinheit (34) eine Linearantriebseinheit mit einem Elektromotor (50) und einer von diesem antreibbaren Gewindespindel ist.

4. Anlage nach einem der Ansprüche 1 bis 3, dadurch gekennzeichnet, daß ein Sensor zum Erfassen der von der Vortriebseinheit (34) gelieferten Vortriebskraft und ein aufgrund des Sensorsignals betätigbarer Schalter zum Abschalten des Motors (50) der Vortriebseinheit (34) bei Erreichen einer bestimmten Vortriebskraft vorgesehen sind.

5. Anlage nach Anspruch 4, dadurch gekennzeichnet, daß die Abschalt-Vortriebskraftschwelle einstellbar ist.

6. Anlage nach Anspruch 4 oder 5, dadurch gekennzeichnet, daß als Sensor ein Dehnungsmeßstreifen oder eine elektrische Wiegezelle vorgesehen ist.

7. Anlage nach einem der Ansprüche 1 bis 6, dadurch gekennzeichnet, daß die Führung mehrere, im wesentlichen vertikale Träger (32) aufweist.

8. Anlage nach einem der Ansprüche 1 bis 7, dadurch gekennzeichnet, daß zum mechanisierten Verfahren des Rahmens (30) mindestens eine Zylinder-Kolben-Einheit (44) vorgesehen ist.

9. Anlage nach einem der Ansprüche 1 bis 8, dadurch gekennzeichnet, daß der erste Transportbahnabschnitt (62) derart mit dem Rahmen (30) für den zweiten Transportbahnabschnitt (36) und die Vortriebseinheit (34) verbunden ist, das er beim Höhenverfahren des Rahmens (30) mitgenommen wird.

10. Anlage nach Anspruch 9, dadurch gekennzeichnet, daß zwischen dem Rahmen (30) und dem ersten Transport bahnabschnitt (62) eine Einrichtung (64) zum mechanisierten Höhenbewegen des ersten Transportbahnabschnitts (62) relativ zu dem zweiten Transportbahnabschnitt (36) vorgesehen ist.

11. Anlage nach Anspruch 10, dadurch gekennzeichnet, daß die Höhenbewegungseinrichtung eine Zylinder-Kolben-Einheit (64) aufweist.

12. Anlage nach einem der Ansprüche 1 bis 11,
dadurch gekennzeichnet,
daß der erste Transportbahnabschnitt eine Schwinge (62) ist, die um ihr dem zweiten Transportbahnabschnitt (36) entferntes Ende schwenkbar ist.

13. Anlage nach einem der Ansprüche 1 bis 12,
dadurch gekennzeichnet,
daß der zweite Transportbahnabschnitt (36) mindestens an einem Ende über ein teleskopisch längenveränderliches, gelenkig angeschlossenes Transportbahn-Zwischenstück (60) mit der anschließenden Transportbahn verbunden ist.

14. Anlage nach einem der Ansprüche 1 bis 13,
dadurch gekennzeichnet,
daß in der Transportbahn vor der Zerlegestation (6), die den Rahmen (30) und den ersten Transportbahnabschnitt (62) aufweist, ein dritter höhenverfahrbarer Transportbahnabschnitt (14) als Vorschneidstation (2) vorgesehen ist.

15. Anlage nach Anspruch 14,
dadurch gekennzeichnet
daß zwischen der Vorschneidstation (2) und einer Zerlegestation (6) ein vierter höhenverfahrbarer Transportbahnabschnitt und eine zugeordnete Schrägzerlegewand (28) als Vorzerlegestation (4) vorgesehen sind.

16. Anlage nach einem der Ansprüche 1 bis 15,
dadurch gekennzeichnet,
daß zwischen einer heran führenden Transportbahn (10) und einer wegführenden Transportbahn (12) zwei hintereinander zu durchlaufende Zerlegestationen (6)`, die jeweils einen Rahmen (30) und einen ersten Transportbahnabschnitt (62) aufweisen, vorgesehen sind.

FIG.1

EP 0 443 101 A2

FIG.2

EP 0 443 101 A2

FIG. 3

EP 0 443 101 A2

FIG.4

FIG.5

EP 0 443 101 A2